# EUROPÄISCHE PATENTSCHRIFT

(11) **EP 1 999 445 B1**
(45) Veröffentlichungstag und Bekanntmachung des Hinweises auf die Patenterteilung: **23.10.2013**
(21) Anmeldenummer: 07723290.8
(22) Anmeldetag: 16.03.2007
(51) Int. Cl.: G01L 1/22

(54) **DEHNUNGSMESSSTREIFEN UND MESSGRÖSSENAUFNEHMER MIT MINDESTENS EINEM DEHNUNGSMESSSTREIFEN**
STRAIN GAUGE AND MEASUREMENT VARIABLE SENSOR HAVING AT LEAST ONE STRAIN GAUGE
JAUGE DE CONTRAINTE ET ENREGISTREUR DE GRANDEUR MESUREE COMPRENANT AU MOINS UNE JAUGE DE CONTRAINTE

(30) Priorität: 21.03.2006 DE 102006012831
(43) Veröffentlichungstag der Anmeldung: 10.12.2008
(73) Patentinhaber: Hottinger Baldwin Messtechnik GmbH, 64293 Darmstadt (DE)
(72) Erfinder: RUPPIN, Hagen, 64569 Nauheim (DE)
(74) Vertreter: Staudte, Ralph
(86) Internationale Anmeldenummer: PCT/EP2007/002308
(87) Internationale Veröffentlichungsnummer: WO 2007/107293

(56) Entgegenhaltungen:
- EP-A- 1 560 010
- EP-A1- 0 451 636
- EP-A1- 0 547 948
- EP-A2- 0 667 514
- DE-A1- 3 532 328
- DE-A1- 10 103 213
- DE-B1- 2 902 242

## Beschreibung

Die Erfindung betrifft einen Dehnungsmessstreifen mit einer Trägerschicht, auf welcher ein Messgitter angeordnet ist, nach dem Oberbegriff des Anspruchs 1.

Dehnungsmessstreifen werden als Messwertaufnehmer für die elektrische Messung von Dehnungen eingesetzt. Aus der Dehnung kann nach Methoden der Festigkeitslehre die Materialspannung berechnet werden. In Abhängigkeit von der zu messenden Größe und dem Einsatzgebiet werden unterschiedliche Dehnungsmessstreifen-Typen eingesetzt, wobei die Dehnungsmessstreifen durch Klebung oder andere Verfahren auf die Messstelle appliziert werden.

Die Dehnungsmessstreifen können nach unterschiedlichen Herstellungsverfahren eingeteilt werden. Bekannt sind unter anderem die sogenannten Dehnungsmessstreifen in Dünnfilmtechnik, wobei das Dehnungsmessstreifen-Element auf einen Messkörper aufgedampft wird. Weiterhin bekannt sind die sogenannten Folien-Dehnungsmessstreifen. Ausführungsformen derartiger Dehnungsmessstreifen offenbaren die DE 29 02 242 Bl, in der ein Dehnungsmessstreifen mit einem auf einer Trägerschicht angeordneten Messgitter beschrieben ist, wobei die Trägerschicht als Folie ausgebildet ist, die EP 0 547 948 A1, die einen Dehnungsmessstreifen mit einer auf einer Trägerschicht angeordneten Messsonde beschreibt, und die EP 0 451 636 A1, die einen Dehnungsmessstreifen mit einem auf einer Trägerschicht angeordneten Messgitter beschreibt, bei dem die Trägerschicht als Kunststofffolie ausgebildet ist.

Bei der Herstellung von Folien-Dehnungsmessstreifen wird aus einer sehr dünnen Metallfolie auf fotolithographischem Wege ein mäanderförmiges Messgitter durch Ätzen hergestellt. Dieses Messgitter wird dann durch Verkleben mit einer isolierenden Trägerschicht aus einem organischen Material verbunden. Als Trägerschichten werden je nach Verwendung und Anforderung Trägerschichtmaterialien aus Epoxydharz, Phenolharz, Polyimid, Polyphenylensulfid, Polyaryletherketon usw. eingesetzt (DE 42 36 985 Cl). Hierbei wird dieses Trägermaterial noch mit einem Füllstoff angereichert. Mögliche Arten von Füllstoffen sind in der DE 35 32 328 A1 und der DE 101 03 213 A1 angegeben.

Die Verklebung zwischen der Trägerschicht und dem Messgitter erfolgt üblicherweise durch einen Wärmedruckprozess (Kaschieren). Auf gleiche Weise wird der Dehnungsmessstreifen auch an einem Messgrößenaufnehmer wie beispielsweise einer Wägezelle appliziert. Nun kommt es beim Kaschieren der Messgitterfolie mit einem Träger aus einem der vorgenannten Trägerschichtmaterialien aufgrund der unterschiedlichen thermischen Ausdehnungskoeffizienten der beiden Materialien zu Spannungen in der Kaschierung (starker Rolleffekt, Bimetalleffekt). Diese inneren Spannungen haften dann auch dem fertigen Dehnungsmessstreifen an. Bei einem Messgrößenaufnehmer, der mit einem mit inneren Spannungen behafteten Dehnungsmessstreifen hergestellt ist, hat dies einen negativen Einfluss auf das Kriechverhalten, das Driftverhalten, die Nullpunktstabilität sowie den Temperaturkoeffizient des Kennwertes des Messgrößenaufnehmers.

In der EP 1 560 010 A1 ist nun ein Dehnungsmessstreifen mit einem auf einer Trägerschicht angeordneten Messgitter beschrieben, bei dem die Trägerschicht als Kunststofffolie ausgebildet ist und als Material Keton Anwendung findet. Gleichzeitig enthält die Schrift Hinweise darauf, dass die Eigenschaften des Dehnungsmessstreifens sich durch die Auswahl des Klebeschichtmaterials mit gleichzeitiger Vorbehandlung der Klebefläche wesentlich verändern bzw. verbessern lassen. Weiterhin ist in der EP 0 667 514 A2 ein Dehnungsmessstreifen mit einem auf einer Trägerschicht angeordneten Messgitter offenbart, wobei die Trägerschicht als Kunststofffolie ausgebildet ist und als Material Polyetherketon Anwendung findet. Die Schrift enthält zusätzlich Hinweise darauf, welche Vorteile sich durch eine vollständige Kapselung des Messsensors bzw. des Dehnungsmessstreifens erreichen lassen.

Der Erfindung liegt die Aufgabe zugrunde, einen kostengünstigen Dehnungsmessstreifen zu schaffen, der eine hohe Messgenauigkeit und vor allem hohe Linearität und optimales Kriechverhalten aufweist.

Diese Aufgabe wird durch einen Dehnungsmessstreifen gelöst, der neben den Merkmalen im Oberbegriff, wie sie auch beim Dehnungsmessstreifen nach der EP 0 667 514 A2 vorhanden sind, zusätzlich noch die kennzeichnenden Merkmale des Anspruchs 1 aufweist.

Bei dem erfindungsgemäßen Dehnungsmessstreifen besteht die Trägerschicht aus einem organischen Material (Polyetheretherketon), wobei diese beim Herstellen mit einem Füllstoff aus Talkum, Bornitrid, Aluminiumoxid oder anderen anorganischen Materialien, welche die thermische Ausdehnung der Trägerschicht reduzieren, versehen wird. Durch die Verwendung der Trägerschicht bestehend aus einer Polyetheretherketonfolie gefüllt mit Talkum wird je nach Füllungsgrad mit Talkum der thermische Ausdehnungskoeffizient der Kunststofffolie reduziert. Die verwendeten Messgitterfolien haben hierbei einen Ausdehnungskoeffizienten von 12 - 17 ppm/K. Die nach dem Stand der Technik verwendeten PEEK-Folien als Trägerschichtmaterialien haben einen Ausdehnungskoeffizienten von ca. 45 ppm/K. Eine gemäß der vorliegenden Erfindung verwendete mit Talkum gefüllte PEEK-Folie hat einen Ausdehnungskoeffizienten, der deutlich geringer ist als der Ausdehnungskoeffizient der ungefüllten PEEK-Folie. Hierdurch wird der Unterschied der thermischen Ausdehnungskoeffizienten der Messgitterfolie gegenüber der Trägerschicht deutlich verringert. Beim Kaschierprozess wird somit die Ausdehnung der Materialien (Trägerschicht/Messgitter) beim Erwärmen und anschließenden Abkühlen weitgehend gleich sein. Hierdurch ist eine weitgehend glatt liegende Kaschierung herstellbar, wobei die inneren Spannungen beim fertigen Dehnungsmessstreifen sehr gering sind. Dabei ist besonders vorteilhaft, dass durch die Wahl des Füllstoffes Talkum mit einem Füllungsgrad von ≥ 20% die Eigenschaften der gewählten Kunststofffolie Polyetheretherketon (gute Klebefähigkeit, Feuchtigkeitsresistenz, Homogenität, konstante Mikrorauhigkeit, feinkörnige Herstellung) erhalten bleiben und dass sich gleichzeitig aber die Gesamteigenschaften des Dehnungsmessstreifens wesentlich verbessern.

Die in den abhängigen Ansprüchen beschriebenen Ausführungen verbessern die erreichten Vorteile noch einmal bzw. geben eine vorteilhafte Anwendung wieder.

Anhand der in der nachfolgenden Zeichnung dargestellten Ausführungsform wird der Erfindungsgegenstand näher beschrieben.

Es zeigt:

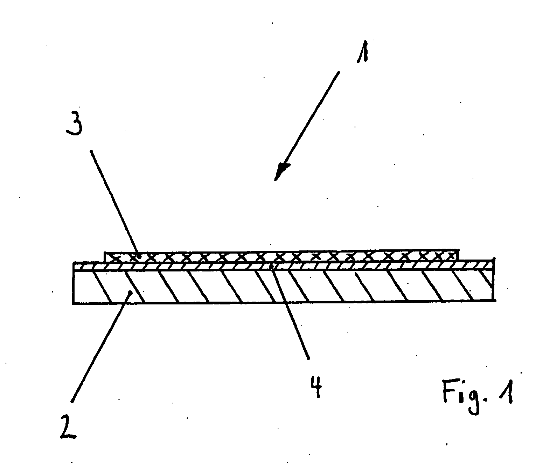

- Fig. 1:: einen erfindungsgemäßen Dehnungsmessstreifen in Schnittdarstellung

Fig. 1 zeigt einen erfindungsgemäßen Dehnungsmessstreifen 1 im Querschnitt, der im Wesentlichen aus einer Trägerschicht 2 und einem Messgitter 3 besteht. Die Trägerschicht 2 ist eine Kunststofffolie aus Polyetheretherketon (PEEK-Folie), die beim Herstellen mit Talkum als Füllstoff versehen ist. Als Füllstoffe sind auch andere anorganische Materialien wie z.B. Bornitrid, Aluminiumoxid vorstellbar, die die thermische Ausdehnung der Kunststofffolie reduzieren. Je nach Füllungsgrad wird der thermische Ausdehnungskoeffizient der Kunststofffolie reduziert. Bei der Herstellung ist hierbei ein Füllungsgrad von ≥ 20% vorgesehen. Die so hergestellte Polyetheretherketonfolie gefüllt mit einem Füllstoff aus Talkum hat dabei vorzugsweise eine Dicke von 10µm bis 100µm. Auf dieser Trägerschicht 2 ist das Messgitter 3 mit einem mäanderförmig angeordneten ausgebildeten Element, z.B. aus einer dünnen metallischen Schicht elektrisch leitenden Materials, angebracht. Die Enden des mäanderförmig angebrachten Elements sind über nicht dargestellte Anschlussbereiche mit einer Auswerteschaltung in Form von z.B. einer Wheatstoneschen Brückenschaltung verbunden. Das Messgitter 3 wird aus der Metallschicht beispielsweise fotolithographisch strukturiert, wobei das Messgitter 3 und die Trägerschicht 2 durch eine Klebeschicht 4 fest miteinander verbunden sind. Als Klebstoffe werden meist Klebstoffe auf Epoxidharz- oder Phenolharzbasis eingesetzt.

Die Verklebung zwischen der Trägerschicht und dem Messgitter erfolgt durch einen Wärmedruckprozess (Kaschieren). Auf gleiche Weise kann der Dehnungsmessstreifen 1 auch am nicht dargestellten Messgrössenaufnehmer (beispielsweise einer Wägezelle) appliziert werden. Durch das Füllen der Kunststofffolie mit Talkum ≥ 20% wird der thermische Ausdehnungskoeffizient des verwendeten Trägerschichtmaterials deutlich reduziert, wodurch der Unterschied der thermischen Ausdehnungskoeffizienten der beiden Materialien (Trägerschicht / Messgitter) sehr gering ist. Beim Kaschierprozess wird somit die Ausdehnung der Materialien beim Erwärmen und anschließenden Abkühlen weitgehend gleich sein. Hierdurch ist eine glatt liegende Kaschierung herstellbar, wobei die inneren Spannungen beim Kaschieren bzw. beim fertigen Dehnungsmessstreifen somit deutlich kleiner sind.

## Patentansprüche

1. Dehnungsmessstreifen (1) mit einer Kunststofffolie aus einem Polyetheretherketon als Trägerschicht (2) und einem auf der Trägerschicht angeordneten Messgitter (3), **dadurch gekennzeichnet, dass** die Kunststofffolie aus Polyetheretherketon mit einem Füllstoff aus Talkum, welcher die thermische Ausdehnung der Trägerschicht (2) reduziert, hergestellt ist, wobei der Füllungsgrad ≥ 20% beträgt.

2. Dehnungsmessstreifen (1) nach Anspruch 1, **dadurch gekennzeichnet, dass** die Dicke der Kunststofffolie zwischen 10µm und 100µm beträgt.

3. Dehnungsmessstreifen (1) nach einem der vorhergehenden Ansprüche, **dadurch gekennzeichnet, dass** der Verbund zwischen Trägerschicht (2) und Messgitter (3) durch Verkleben, vorzugsweise durch einen Kaschierprozess, hergestellt ist.

4. Dehnungsmessstreifen (1) nach einem der vorhergehenden Ansprüche, **gekennzeichnet durch** die Verwendung in einem Messgrößenaufnehmer.

## Claims

1. Strain gauge (1) comprising a plastic film made of a polyetheretherketone, which serves as a carrier layer (2), and a measurement grating (3) arranged on the carrier layer, **characterized in that** the plastic film made of polyetheretherketone is made with a filler of talc which reduces the thermal expansion of the carrier layer (2), the filling degree being ≥ 20%.

2. Strain gauge (1) according to claim 1, **characterized in that** the thickness of the plastic film is between 10*µ*m and 100*µ*m.

3. Strain gauge (1) according to any of the preceding claims, **characterized in that** the bond between the carrier layer (2) and the measurement grating (3) is made by gluing, preferably by a laminating process.

4. Strain gauge (1) according to any of the preceding claims, **characterized by** using it in a measurement variable sensor.

## Revendications

1. Jauge extensométrique (1) dotée d'un film plastique fait d'un polyétheréthercétone servant de couche de support (2) et d'une grille de mesure (3) disposée sur la couche de support, **caractérisée en ce que** le film plastique en polyétheréthercétone est fabriqué avec un matériau de remplissage constitué de talc qui réduit la dilatation thermique de la couche de support (2), le degré de remplissage étant ≥ 20%.

2. Jauge extensométrique (1) selon la revendication 1, **caractérisée en ce que** l'épaisseur du film plastique est comprise entre 10 *µ*m et 100 *µ*m.

3. Jauge extensométrique (1) selon l'une quelconque des revendications précédentes, **caractérisée en ce que** l'assemblage entre la couche de support (2) et la grille de mesure (3) est fabriqué par encollage, de préférence par un procédé de laminage.

4. Jauge extensométrique (1) selon l'une quelconque des revendications précédentes, **caractérisée en ce qu'**elle est utilisée dans un transducteur de grandeurs de mesure.
